(19) Europäisches Patentamt
European Patent Office
Office européen des brevets

(11) **EP 4 730 633 A1**

(12) **EUROPEAN PATENT APPLICATION**

(43) Date of publication:
**22.04.2026   Bulletin 2026/17**

(21) Application number: 25209609.4

(22) Date of filing: **17.10.2025**

(51) International Patent Classification (IPC):
*H02M 3/335* $^{(2006.01)}$   *H02M 1/00* $^{(2006.01)}$

(52) Cooperative Patent Classification (CPC):
**H02M 3/33584; H02M 1/0012; H02M 1/0058;
H02M 3/33573;** H02M 1/0025

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:   **21.10.2024   US 202463709716 P**

(71) Applicant: **Milwaukee Electric Tool Corporation
Brookfield, WI 53005 (US)**

(72) Inventor: **LAMB, Jacob M.
Jackson, WI (US)**

(74) Representative: **Forresters IP LLP
Skygarden
Erika-Mann-Straße 11
80636 München (DE)**

(54) **POWER CONVERTER LINEARIZATION**

(57)     A device includes a bidirectional direct current-direct current converter and a controller. The bidirectional direct current-direct current converter includes a plurality of switches configured to control a flow of electrical power between a primary side and a secondary side. The controller is configured to generate a first control signal, the first control signal being correlated to a desired phase shift angle between the primary side and the secondary side, apply a linearization transformation to the first control signal to generate a second control signal, the second control signal being proportional to a desired flow of electrical power between the primary side and the secondary side, and control the plurality of switches according to the second control signal to regulate the flow of electrical power between the primary side and the secondary side.

EP 4 730 633 A1

**Description**

CROSS-REFERENCE TO RELATED APPLICATION

This application claims the benefit of U.S. Provisional Application No. 63/709,716 filed October 21, 2024, the entire disclosure of which is incorporated by reference.

FIELD

The present disclosure relates to control techniques for power converters and, more particularly, to control techniques for power converters used in grid support devices.

SUMMARY

Grid support devices manage the power transfer between a battery system, an alternating current (AC) input source (such as an electrical grid), and a power output to achieve a variety of technical benefits. When connected to input AC power, grid support devices can charge the battery system using the incoming AC power while, in some cases, simultaneously supplying power to any devices connected to the power output. For example, when the demand from the connected devices exceeds the capacity of the AC input or electrical grid, the grid support device can discharge power from the battery system to supplement the AC input, ensuring stable and continuous operation of the connected devices. Additionally, grid support devices can also function as portable power supplies, drawing power from the battery system when external AC power is unavailable, to continue powering the connected devices.

To achieve this functionality, grid support devices may incorporate a bidirectional power converter, which allows power to flow in both directions between the battery system, the AC input source, and the power output. This bidirectional power transfer allows the grid support device to charge the battery system when connected to an AC power source and discharge the battery system when AC input power is insufficient or unavailable. A dual active bridge (DAB) converter is a specific type of bidirectional power converter, and may offer additional technical advantages that make it particularly effective in grid support or power supply operations. For example, the DAB converter's low inertia facilitates fast response times to dynamic load changes - when the input AC power fluctuates or the connected devices suddenly increase their power demand, the DAB converter can quickly adjust to provide additional power from the battery system, ensuring uninterrupted and reliable operation.

The DAB converter's wide operating voltage range offers additional technical advantages. For example, batteries can have varying voltage levels based on their state of charge, and devices connected to the grid support device may operate at different voltages. The DAB converter's ability to efficiently convert power across a wide voltage spectrum ensures compatibility with different batteries at varying states of charge as well as different electrical loads from a range of connected devices.

Electronic controllers may regulate power converters such as DAB converters by adjusting a phase shift angle such as the phase angle $\varphi$ between the primary and secondary sides of the power converter. The phase angle $\varphi$ may represent the timing difference between the switching operations on the primary and secondary sides and/or may correspond to the electrical phase difference between the resulting waveforms. Thus, adjusting the phase angle $\varphi$ controls the amount of power transferred between the two sides. However, while the power transfer $P$ may be a function of the phase angle $\varphi$, the relationship between the phase angle $\varphi$ and the power transfer $P$ is non-linear. For example, the power transfer $P$ between the primary side and the secondary side of a DAB converter can be expressed according to equation (1) below:

$$P(\varphi) = \frac{V_s \cdot V_p \cdot \frac{N_s}{N_p} \cdot \varphi \cdot (\pi - |\varphi|)}{\pi \cdot \omega_{sw} \cdot L_{Lk,s}} \tag{1}$$

In equation (1) above, $V_p$ may represent the voltage on the primary side of the transformer, $V_s$ may represent the voltage on the secondary side of the transformer, $N_p$ may represent the number of turns on the primary side of the transformer, $N_s$ is may represent the number of turns on the secondary side of the transformer, $\omega_{sw}$ may represent the angular switching frequency of the transformer, and $L_{Lk,s}$ may represent the leakage inductance on the secondary side of the transformer. Thus, as illustrated in equation (1), when the phase angle $\varphi$ is changed linearly, the power transferred $P$ changes non-linearly.

The non-linear relationship between the phase angle $\varphi$ and the power transferred $P$ by a DAB converter can create technical challenges for electronic controllers, particularly electronic controllers implementing proportional-integral (PI) or proportional-integral-derivative (PID) control. For example, PI and PID controllers may adjust the phase angle $\varphi$ to minimize the difference between the desired setpoint (such as a target power transfer) and the actual output (such as the actual power transferred). However, the non-linear nature of the phase angle $\varphi$-power transfer $P$ relationship can mean that small adjustments to the phase angle $\varphi$ can result in disproportionate changes in the actual power transfer $P$, especially near the extreme ends of the phase angle range. For example, as the phase angle $\varphi$ approaches $\frac{\pi}{2}$ - where the power transfer $P$ peaks, the electronic controller may struggle with overshoot or undershoot, as it may not be able to precisely predict the effect of its adjustments. Overshoot may occur when the power delivered exceeds the target before stabilizing. Undershoot may occur when the power delivered falls short of the target before stabilizing. As a result, the electronic controller may overcorrect or take too long to reach the setpoint.

Systems, apparatuses, methods, and techniques described in this specification provide technical solutions to these challenges (among others) by applying a linearization function to control signals such as the phase angle $\varphi$ to generate a linearized control signal. The electronic controller then uses the linearized control signal to regulate the power converter's operation. Using the linearized control signal to regulate the power converter's operation simplifies the control dynamics, allowing the electronic controller to maintain stable, real-time control with a reduced risk of overshoot or undershoot. The linearized control signal means that each incremental adjustment that the electronic controller makes produces a proportional change in power transfer $P$, improving the electronic controller's ability to efficiently minimize the error between the desired setpoint and the actual output. Using the linearized control system also ensures that the electronic controller's response bandwidth remains consistent, reducing or eliminating unpredictable behaviors as the phase angle $\varphi$ changes. This allows the electronic controller to operate with more precision and reliability, ensuring faster response times and improving the overall performance of the power converter.

According to some examples, a device includes a bidirectional direct current-direct current converter and a controller. The bidirectional direct current-direct current converter includes a plurality of switches configured to control a flow of electrical power between a primary side and a secondary side. The controller is configured to generate a first control signal, the first control signal being correlated to a desired phase shift angle between the primary side and the secondary side, apply a linearization transformation to the first control signal to generate a second control signal, the second control signal being proportional to a desired flow of electrical power between the primary side and the secondary side, and control the plurality of switches according to the second control signal to regulate the flow of electrical power between the primary side and the secondary side.

In other features, controller implements a proportional-integral controller to generate the first control signal. In other features, the controller implements a proportional-integral-derivative controller to generate the first control signal. In other features, changes in the desired phase shift angle are not linearly proportional to changes in the desired flow of electrical power between the primary side and the secondary side. In other features, changes in the second control signal are linearly proportional to changes in the flow of electrical power between the primary side and the secondary side.

In other features, the primary side includes a voltage source configured to receive direct current electrical power, a first capacitor connected in parallel with the voltage source, and a first bridge connected in parallel with the voltage source and the first capacitor. The first bridge including a first plurality of switches and a first plurality of diodes. In other features, the secondary side includes a second bridge including a second plurality of switches and a second plurality of diodes, a second capacitor connected in parallel with the second bridge, and a voltage output connected in parallel with the second capacitor and the second bridge.

In other features, the device includes an inductor positioned between the first bridge and the second bridge and a transformer positioned between the first bridge and the second bridge. In other features, the controller is configured to control the first plurality of switches to generate an alternating current waveform. The alternating current waveform is transferred through the transformer to the second bridge. In other features, the controller is configured to control the second plurality of switches to rectify the alternating current waveform into a direct current output.

Other examples provide a method for operating a bidirectional direct current-direct current converter that includes generating a first control signal, applying a linearization transformation to the first control signal to generate a second control signal, and controlling a plurality of switches of the bidirectional direct current-direct current converter according to the second control signal to regulate a flow of electrical power between a primary side and a secondary side of the bidirectional direct current-direct current converter. The first control signal is correlated to a desired phase shift angle between the primary side and the secondary side. The second control signal being proportional to a desired flow of electrical power between the primary side and the secondary side.

In other features, the first control signal is generated by a proportional-integral controller. In other features, the first control signal is generated by a proportional-integral-derivative controller. In other features, changes in the desired phase shift angle are not linearly proportional to changes in the desired flow of electrical power between the primary side and the secondary side. In other features, changes in the second control signal are linearly proportional to changes in the flow of electrical power between the primary side and the secondary side.

In other features, the primary side comprises a voltage source configured to receive direct current electrical power, a first capacitor connected in parallel with the voltage source, and a first bridge connected in parallel with the voltage source and the first capacitor, the first bridge including a first plurality of switches and a first plurality of diodes. In other features, the secondary side comprises a second bridge including a second plurality of switches and a second plurality of diodes, a second capacitor connected in parallel with the second bridge, and a voltage output connected in parallel with the second capacitor and the second bridge.

In other features, an inductor is positioned between the first bridge and the second bridge and a transformer is positioned between the first bridge and the second bridge. In other features, the method includes controlling the first plurality of switches to generate an alternating current waveform and transferring the alternating current waveform through the transformer to the second bridge. In other features, the method includes controlling the second plurality of switches to rectify the alternating current waveform into a direct current output.

Before any embodiments are explained in detail, it is to be understood that the embodiments are not limited in their application to the details of the configuration and arrangement of components set forth in the following description or illustrated in the accompanying drawings. The embodiments are capable of being practiced or of being carried out in various ways. Also, it is to be understood that the phraseology and terminology used herein are for the purpose of description and should not be regarded as limiting. The use of "including," "comprising," or "having" and variations thereof are meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings.

In addition, it should be understood that embodiments may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one embodiment, the electronic-based aspects may be implemented in software (e.g., stored on non-transitory computer-readable medium) executable by one or more processing units, such as a microprocessor and/or application specific integrated circuits ("ASICs"). As such, it should be noted that a plurality of hardware and software-based devices, as well as a plurality of different structural components, may be utilized to implement the embodiments. For example, "servers," "computing devices," "controllers," "processors," etc., described in the specification can include one or more processing units, one or more computer-readable medium modules, one or more input/output interfaces, and various connections (e.g., a system bus) connecting the components.

Relative terminology, such as, for example, "about," "approximately," "substantially," etc., used in connection with a quantity or condition would be understood by those of ordinary skill to be inclusive of the stated value and has the meaning dictated by the context (e.g., the term includes at least the degree of error associated with the measurement accuracy, tolerances [e.g., manufacturing, assembly, use, etc.] associated with the particular value, etc.). Such terminology should also be considered as disclosing the range defined by the absolute values of the two endpoints. For example, the expression "from about 2 to about 4" also discloses the range "from 2 to 4." The relative terminology may refer to plus or minus a percentage (e.g., 1%, 5%, 10%, or more) of an indicated value.

It should be understood that although certain drawings illustrate hardware and software located within particular devices, these depictions are for illustrative purposes only. Functionality described herein as being performed by one component may be performed by multiple components in a distributed manner. Likewise, functionality performed by multiple components may be consolidated and performed by a single component. In some embodiments, the illustrated components may be combined or divided into separate software, firmware and/or hardware. For example, instead of being located within and performed by a single electronic processor, logic and processing may be distributed among multiple electronic processors. Regardless of how they are combined or divided, hardware and software components may be located on the same computing device or may be distributed among different computing devices connected by one or more networks or other suitable communication links. Similarly, a component described as performing particular functionality may also perform additional functionality not described herein. For example, a device or structure that is "configured" in a certain way is configured in at least that way but may also be configured in ways that are not explicitly listed.

Other examples, embodiments, features, and aspects will become apparent by consideration of the detailed description and accompanying drawings.

BRIEF DESCRIPTION OF THE DRAWINGS

FIG. 1 is a block diagram illustrating an example grid support device, according to some embodiments.

FIG. 2A is an isometric view of an example grid support device configured as a portable power source, according to some embodiments.

FIG. 2B is an isometric view of an example grid support device configured as a portable power source, according to some embodiments.

FIG. 3 is a block diagram illustrating a control system for a grid support device, according to some embodiments.

FIGS. 4A and 4B are schematic diagrams illustrating an example DAB converter that may be used in a power converter, according to some embodiments.

FIG. 5 is a flowchart illustrating an example process for controlling operation of a power converter, according to some embodiments.

FIG. 6 is a block diagram illustrating an example control loop, according to some embodiments.

FIG. 7 is a block diagram illustrating operations that an electronic controller performs to implement a linearizer model, according to some embodiments.

In the drawings, reference numbers may be reused to identify similar and/or identical elements.

DETAILED DESCRIPTION

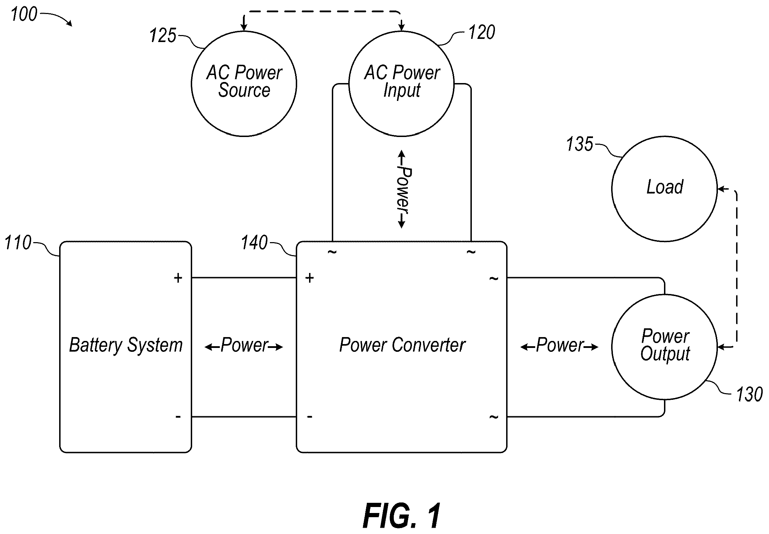

FIG. 1 is a block diagram illustrating an example grid support device 100, according to some embodiments. The grid support device 100 may include a battery system 110, an alternating current power input 120, a power output 130, and a power converter 140. The power converter 140 may be electrically connected between the battery system 110, the AC power input 120, and the power output 130 and manage power flow between the battery system 110, the AC power input 120, and the power output 130. The AC power input 120 may be connected to an external power source, such as an AC power source 125. In various implementations, the AC power source 125 is an electrical power grid, such as a residential or commercial 120-volt or 240-volt grid. In some examples, the AC power input 120 connects to the AC power source 125 via a power cord.

The power output 130 may include a combination of AC and/or direct current (DC) power outlets, which may provide electrical power to an external load 135. For example, the load 135 may include the electrical load from any connected external electronic devices. In various implementations, the power output 130 also supplies electrical power to internal components of the grid support device 100, such as a motor, a heating device, or other elements. The power converter 140 allows the grid support device 100 to manage power flow between the battery system 110, the AC power input 120, and/or the power output 130 by converting between different forms of electricity. For example, the power converter 140 may convert DC to AC (direct current-alternating current), AC to DC (alternating current-direct current), DC to DC (direct current-direct current), and/or AC to AC (alternating current-alternating current) depending on the requirements of the grid support device 100.

In various implementations, the power converter 140 transforms DC power supplied from the battery system 110 into AC power output via the power output 130. In some examples, the power converter 140 transforms DC power from the battery system 110 into DC power output via the power output 130. In various implementations, the power converter 140 converts AC power from the AC power input 120 into DC power to charge the battery system 110. In some examples, the power converter 140 supports passthrough power, allowing AC power from the AC power input 120 to be supplied to the power output 130.

In operation, when the AC power source 125 is available, the AC power input 120 may receive AC power, provide AC power to the power converter 140, and the power converter 140 converts the AC power to DC to charge the battery system 110, ensuring that the battery system 110 is charged and ready for future use. In scenarios where the AC power source 125 is unavailable or when the load 135 exceeds the power that the AC power source 125 can provide, the power converter 140 may convert DC power from the battery system 110 into AC, which may be delivered to the power output 130 to supplement or replace the power supplied from the AC power input 120. This capability ensures that any devices connected to the power output 130 can continue operating without interruption, even in the absence of an AC power source 125 or when the load 135 exceeds the limits of the AC power source 125. In various implementations, when the power output from the power output 130 is below a threshold, the power converter 140 charges one or more batteries of the battery system 110 without reducing the power provided by the power output 130.

The power converter 140 may include one or more bidirectional converters and/or multiple unidirectional converters. Unidirectional converters allow power conversion in one direction - either from AC to DC or from DC to AC. By contrast, bidirectional converters can manage power flow in both directions. Implementing the power converter 140 by including bidirectional converters may simplify the design of the grid support device 100 by eliminating the need for separate charging and discharging circuits, thereby reducing the overall cost and complexity of the grid support device 100. Additionally, implementing the power converter 140 by including bidirectional converters may improve the reliability of the grid support device 100 reducing the number of components needed and simplifying the maintenance and troubleshooting processes for the device.

In various implementations, the grid support device 100 includes one or more sensors positioned to detect and monitor the power level of the load 135. For example, one or more sensors can measure the output current supplied to the load 135 via the power output 130, and this sensor data may be used to calculate the power consumption at the power output 130. In various implementations, the grid support device 100 monitors the power level of the load 135 to make real-time adjustments to optimize power delivery and ensure the efficient management of both external loads such as the load 135 and the battery system 110.

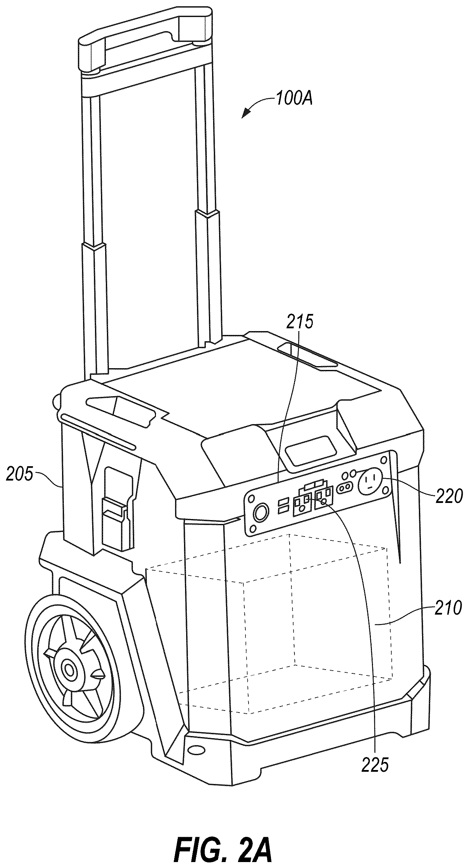

FIG. 2A is an isometric view of an example grid support device 100 configured as a portable power source 100A, according to some embodiments. In the example of FIG. 2A, the portable power source 100A includes a housing 205, which includes an internal battery module 210. An input/output panel 215 may be disposed on an exterior of the housing 205. The input/output panel 215 may include a power input 220 and one or more power outlets 225. The power outputs 225 may include one or more AC outlets designed to power AC electronic devices and/or one or more DC outlets designed to power DC electronic devices.

Various components of the portable power source 100A of FIG. 2A correspond to previously described components of the grid support device 100 of FIG. 1. In various implementations, the internal battery module 210 corresponds to the battery system 110, the power input 220 corresponds to the AC power input 120, and the power outlets 225 correspond to the power output 130. Thus, in the example of FIG. 2A, the power converter 140 is electrically connected between the internal battery module 210, the power input 220, and the power outlet 225. As in the example of FIG. 1, the power converter 140 may perform power conversion tasks, such as converting DC power from the internal battery module 210 to AC power for the power outlet 225, converting AC power from the power input 220 to DC power to charge the internal battery module 210, and/or passing power through from the power outlet 225 to the power outlets 225.

The power converter 140 may be designed to handle high amperage, making the portable power source 100A suitable for powering a wide range of electronic devices, including those with significant power requirements. Thus, the AC power outlets 225 may be able to support devise such as power tools, appliances, and/or large electronic equipment. The high amperage capability of the power converter 140 ensures that the portable power source 100A is able to delivery stable and reliable power to these connected devices, reducing or eliminating issues such as voltage drops or other forms of performance degradation. This capability may be particularly beneficial when connected power tools draw high current under heavy load conditions. In such cases, when directly connected to the power grid, load spikes introduced by the power tools can cause circuit breakers to trip, interrupting work being performed using the power tools. However, when the power tools are connected to the portable power source 100A, the power converter 140 can supplement the grid power input via the power input 220 with power from the internal battery module 210, reducing or eliminating interruptions resulting from high current spikes.

Additionally, the high amperage capability of the power converter 140 allows for rapid charging of the internal battery module 210. When the portable power source 100A is connected to the AC power source 125 via the power input 220, the power converter 140 may operate to efficiently convert AC power to DC power, which facilitates the rapid recharging of the internal battery module 210. This fast-charging capability offers benefits to users who may require quick recharges between uses or during short breaks in work, ensuring that the portable power source 100A remains ready for continuous operation.

The portable power source 100A may incorporate additional features to enhance its functionality and the user experience. For example, a display panel may be integrated into the housing 205 to provide users with real-time information such as the charge level of the internal battery module 210, power output, output current, historical data, estimated remaining battery life, and other relevant data. These features improve usability and ensure the device is adaptable for a variety of scenarios. The high amperage capability of the power converter 140 also makes the portable power source 100A suitable for use in a variety of applications, including outdoor events, emergency situations, or as a backup power supply for homes and small businesses during temporary power outages, ensuring a reliable source of power is available when needed.

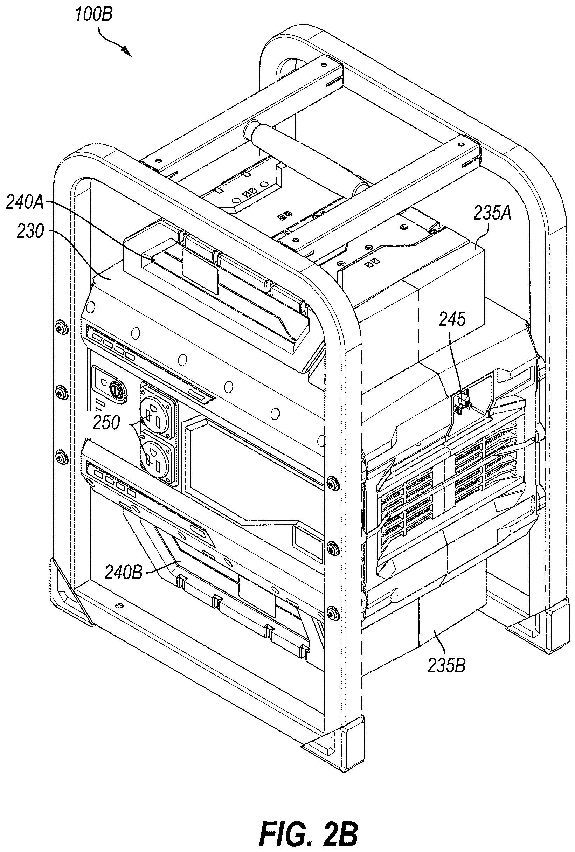

FIG. 2B is an isometric view of an example grid support device 100 configured as a portable power source 100A, according to some embodiments. In the example of FIG. 2B, the portable power source 100B includes a housing 230 having a first battery interface 235A and a second battery interface 235B. The first battery interface 235A may be configured to removably receive a first power tool battery pack 240A, and the second battery interface 235B may be configured to removably receive a second power tool battery pack 240B. The removable power tool battery packs 240A and 240B (referred to collectively as power tool battery packs 240) may be lithium-ion battery packs commonly used by cordless power tools. The power tool battery packs 240 may have (collectively or individually) nominal voltages of about 12 volts, about 18 volts, about 24 volts, about 36 volts, about 54 volts, about 72 volts, about 90 volts, about 108 volts, etc., making them versatile for powering a variety of cordless indoor and outdoor power tools. The portable power source 100B may also include a power input 245 and one or more power outlets 250. In various implementations, the power outlets 250 include one or more AC outlets for powering external AC electronic devices. In some examples, the power outlets 250 include one or more AC outlets for powering external DC electronic devices.

Various components of the portable power source 100B of FIG. 2B correspond to previously described components of the grid support device 100 of FIG. 1. In various implementations, the power tool battery packs 240 corresponds to the battery system 110, the power input 245 corresponds to the AC power input 120, and the power outlets 250 correspond to the power output 130. Accordingly, the power converter 140 may be connected between the removable power tool battery packs 240, the power input 245, and the power outlets 250. As in the previously described examples, the power converter 140 manages power flow by converting AC power from the power input 245 into DC power to recharge the power tool battery packs 240. The power converter 140 may also convert DC power from the battery packs 240 into AC power for the power outlets 250 and/or provide AC power from the power input 245 to the power outlets 250. In various implementations, the portable power source 100B includes a display for monitoring power usage and/or battery levels.

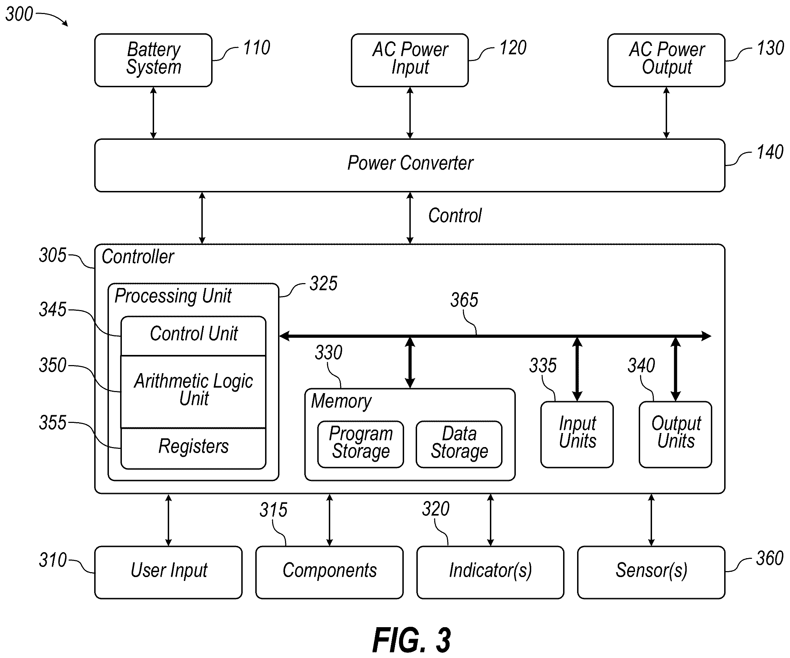

FIG. 3 is a block diagram illustrating a control system 300 for the grid support device 100, according to some embodiments. In various implementations, the control system 300 can be integrated into or connected to a printed circuit board (PCB) and can include an electronic controller 305. The electronic controller 305 may be electrically and/or communicatively connected to various modules and/or components of the grid support device 100. In the example of FIG. 3, the electronic controller 305 is connected to the power converter 140, a user input 310, other components 315 - such as a battery pack power gauge and/or work lights (e.g., light emitting diodes [LEDs]), as may be applicable, one or more indicators 320 (e.g., LEDs), and one or more sensors 360 - such as current and/or voltage sensors.

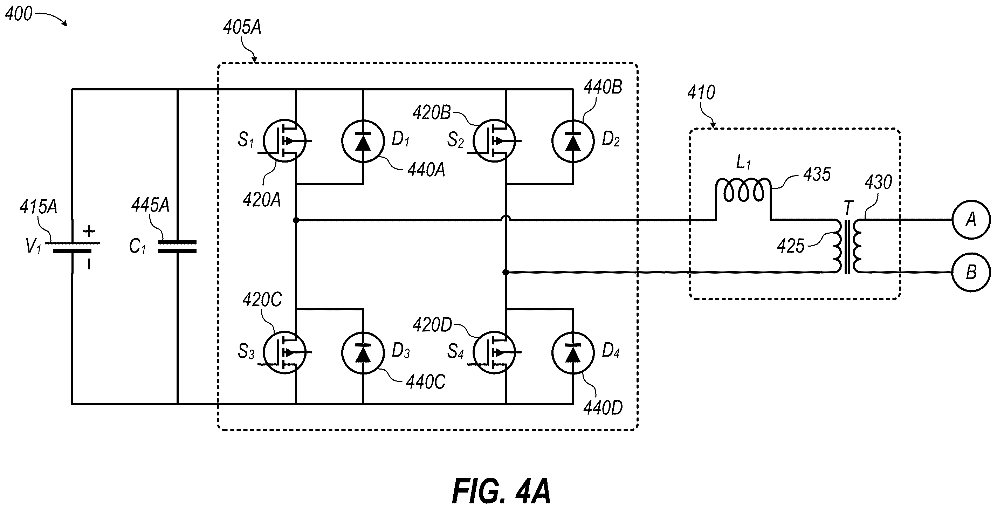

The electronic controller 305 may include hardware and/or software designed to manage the operation of the grid support device 100 (as will be described in detail with reference to FIGS. 4A-7). The electronic controller 305 may include various electrical and/or electronic components that provide power, operational control, and/or protection to the components and/or modules within the electronic controller 305 and/or the grid support device 100. For example, the electronic controller 305 includes a processing unit 325 (such as a microprocessor, a microcontroller, or other suitable programmable devices), a memory 330, input units 335, and/or output units 340. The processing unit 325 may include components such as a control unit 345, an arithmetic logic unit (ALU) 350, and/or a set of registers 355 (depicted in FIG. 3 as a group of registers). The processing unit 325 may use computer architectures such as a modified Harvard architecture, a von Neumann architecture, or other suitable architectures.

The processing unit 325, memory 330, input units 335, output units 340, and/or other modules connected to the electronic controller 305 may be interconnected via one or more control and/or data buses such as a common bus 365. While these buses are shown generally in FIG. 3 for illustrative purposes, the use of one or more control and/or data buses for the interconnection between and communication among the various modules and/or components would be known to a person skilled in the art in view of the embodiments described herein.

The memory 330 may include a non-transitory computer-readable medium that includes, for example, a program storage area and/or a data storage area. The program storage area and data storage area can include any combination of different types of memory, such as read-only memory (ROM), random access memory (RAM - such as, for example, dynamic RAM [DRAM], synchronous DRAM [SDRAM], etc.), electrically erasable programmable read-only memory (EEPROM), flash memory, one or more hard drives, one or more SD cards, and/or other suitable magnetic, optical, physical, and/or electronic memory devices. The processing unit 325 may be connected to the memory 330 and may execute software instructions that are capable of being stored in a RAM of the memory 330 (such as during execution), a ROM of the memory 330 (such as on a generally permanent basis), and/or another non-transitory computer-readable medium such as another memory or a disc.

The software stored in memory 330 may control various functions of the grid support device 100. For example, the functional blocks and flowcharts elements described herein may serve as software specifications, which can be translated into the computer programs by the routine work of a skilled technician or programmer. This software may include firmware, applications, program data, filters, rules, program modules, and/or other executable instructions. The electronic controller 305 may retrieve and execute these instructions to control the operation of the grid support device 100. In other configures, the electronic controller 305 may include additional, fewer, and/or different components depending on the specific implementation.

The grid support device 100 may be configured to operate in various modes, depending on power needs. For example, the grid support device 100 can operate in a charge-only mode, where the controller 305 controls the power converter 140 to convert AC power from the AC power input 120 to DC power at the appropriate level to charge the battery system 110. In various implementations, the grid support device 100 operates in a discharge-only mode, during which controller 305 manages the power converter 140 to convert DC power from the battery system 110 to AC power and/or DC power (for example, at a same or different level) for the power output 130.

In a passthrough-only mode, the controller 305 may disable the power converter 140 and connect the AC power input 120 directly to the power output 130, which provides input AC power from the AC power source 125 (received via the AC power input 120) directly to the power output 130. In a grid support mode, the controller 305 may control the power converter 140 to convert DC power from the battery system 110 into AC power, which supplements the power received from the AC power input 120 before the combined power is provided to the power output 130. This allows the grid support device 100 to handle dynamic load changes and maintain reliable power output, even when the load 135 exceeds the capacity of the AC power source 125.

The grid support device 100 may operate in other operational modes, such as a charge-discharge mode and/or a charge-passthrough mode, where the controller 305 manages power flow based on current demand. In each of these modes, the controller 305 may control the operation of the power converter 140 to ensure efficient power delivery and management across all operational scenarios.

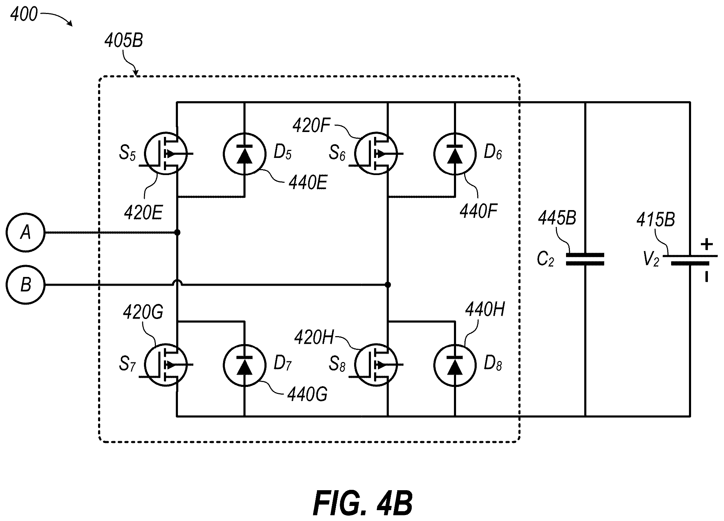

FIGS. 4A and 4B are schematic diagrams illustrating an example DAB converter 400 that may be used in the power converter 140, according to some embodiments. In the example of FIGS. 4A and 4B, the DAB converter 400 may be positioned between the battery system 110 and a DC bus, providing for bidirectional power conversion between the battery system 110 and the DC bus. For example, the DAB converter 400 may convert power at a first voltage (e.g., 400 volts) from the DC bus to a second voltage at the battery system 110 (e.g., which may correspond to the charging voltage of the battery system 110) to charge the battery system 110. Similarly, the DAB converter 400 may convert power at a third voltage (e.g., the battery system voltage) to the first voltage at the DC bus, which can then be converted to AC to power the load 135. In the example of FIGS. 4A and 4B, the DAB converter 400 includes a first bridge 405A, a second bridge 405B, and a transformer 410 electrically connected between the first bridge 405A and the second bridge 405B.

The first bridge 405A may be connected to a first DC bus 415A (e.g., corresponding to the battery system 110) and include four switches 420A, 420B, 420C, and 420D arranged in an H-bridge configuration. The high-side switches 420A and 420 B may be electrically connected between the positive terminal of the first DC bus 415A and a first side 425 of the transformer 410. The low-side switches 420C and 420D may be electrically connected between the negative terminal of the first DC bus 415A and the first side 425 of the transformer 410.

Similarly, the second bridge 405B may be connected to a second DC bus 415B (e.g., the DC bus of the grid support device 100) and include four switches 420E, 420F, 420G, and 420H arranged in an H-bridge configuration. The high-side switches 420E and 420F may be electrically connected between the positive terminal of the second DC bus 415B and a second side 430 of the transformer 410, while the low-side switches 420G and 420H may be electrically connected between the negative terminal of the second DC bus 415B and the second side 430 of the transformer 410.

The switches 420A-420H may be implemented using metal oxide semiconductor field effect transistors (MOSFETs) or wide bandgap semiconductor field effect transistors (FETs), such as gallium nitride (GaN) or silicon carbide (SiC) based FETs. In some configurations, a combination of MOSFETs and wide bandgap FETs may be used. The switches 420A-H may be controlled by the electronic controller 305 (for example, via a gate driver), ensuring precise switching and efficient power conversion.

The switches 420A-420D on the first side 425 of the transformer 410 may be electrically connected to an inductor 435. The transformer 410 may be a high-frequency transformer, configured to either step up, step down, or maintain the voltage between the first side 425 and the second side 430 of the transformer 410.

In one direction, the DAB converter 400 converts a first voltage at the first DC bus 415A to a second voltage at the second DC bus 415B. In this configuration, yhe first side 425 of the transformer 410 may be referred to as the primary side, while the second side 430 may be referred to as the secondary side. The electronic controller 305 controls the switches 420A-420D to convert the DC voltage at the first DC bus 415A into an AC voltage at the first side 425 of the transformer 410.

This conversion may be achieved by alternating the switching states of the switches 420A-420D in a coordinated manner. For example, to create an AC waveform, the electronic controller 305 may turn on switches 420A and 420D for a portion of the switching cycle, allowing current to flow through the transformer 410 in one direction. In the next half of the cycle, switches 420B and 420C are turned on, reversing the current flow through the transformer 410, thereby generating an alternating voltage across the first side 425. The timing and sequence of the switching are determined by phase shift angle such as the phase angle $\varphi$, which is controlled by the electronic controller 305 to regulate the amount of power transferred between the primary and secondary sides. A larger phase angle $\varphi$ increases the power transfer, while a smaller phase angle $\varphi$ reduces it.

The transformer 410 then generates a corresponding AC voltage on the second side 430. The electronic controller 305 controls the switches 420E-420H to convert this AC voltage back to DC at the second DC bus 415B. In this case, the switches 420E-420H operate similarly to rectify the AC voltage into DC. For instance, when switches 420E and 420H are turned on, current flows through the transformer in one direction, producing a positive output on the DC bus. In the next half-cycle, switches 420F and 420G are turned on, allowing current to flow in the opposite direction and completing the rectification process, resulting in a DC voltage at the second DC bus 415B.

In reverse operation, the electronic controller 305 controls the switches 420E-420H to convert a DC voltage at the second DC bus 415B into an AC voltage at the second side 430 of the transformer 410, which is now functioning as the primary side. A similar principle applies, but the switching occurs on the second side 430. For example, the electronic controller 305 may alternately switch the switches 420E and 420H to allow current to flow through the transformer 410 in one direction, and then switch the switches 420F and 420G to reverse the current direction, thereby generating an alternating voltage at the second side 430.

The transformer 410 generates a corresponding AC voltage on the first side 425, which is now functioning as the secondary side in this reverse mode. The electronic controller 305 then controls the switches 420A-420D to convert the AC voltage into DC at the first DC bus 415A. Similar to the previous operation, the electronic controller 305 alternates the switching of the switches 420A and 420D in one half-cycle and the switching of the switches 420B and 420C in the next, rectifying the AC voltage into a DC voltage at the first DC bus 415A. During both directions of power transfer, the phase angle $\varphi$ between the switching waveforms of the bridges 405A and 405B may be adjusted by the controller 305, allowing for precise control over the amount of power transferred and ensuring efficient operation of the DAB converter 400.

In various implementations, each switch 420A-420H includes a corresponding diode connected in parallel, which helps reverse current flow and protects the respective switch during power conversion. For example, a diode 440A may be connected in parallel with the switch 420A, a diode 440B may be connected in parallel with the switch 420B, a diode 440C may be connected in parallel with the switch 420C, a diode 440D may be connected in parallel with the switch 420D, a diode 440E may be connected in parallel with the switch 420E, a diode 440F may be connected in parallel with the switch 420F, a diode 440G may be connected in parallel with the switch 420G, and a diode 440H may be connected in parallel with the switch 420H. Examples of suitable diodes include Schottky diodes, ultrafast recovery diodes, and SiC diodes.

In some examples, a capacitor is connected in parallel with each DC bus 415A and 415B, providing voltage smoothing and stability during operation. For example, a capacitor 445A may be connected in parallel with the DC bus 415A between the DC bus 415A and the first H-bridge 405A, and a capacitor 445B may be connected in parallel with the DC bus 415B between the DC bus 415B and the second H-bridge 405B. Examples of suitable capacitors include electrolytic capacitors, film capacitors, ceramic capacitors, and polymer capacitors.

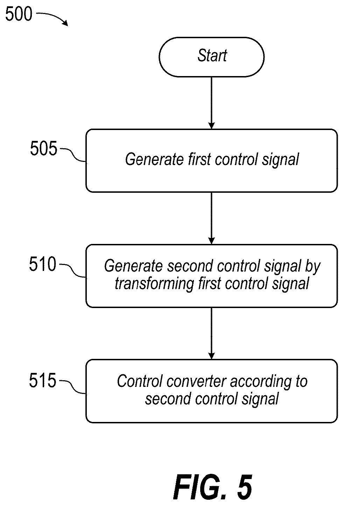

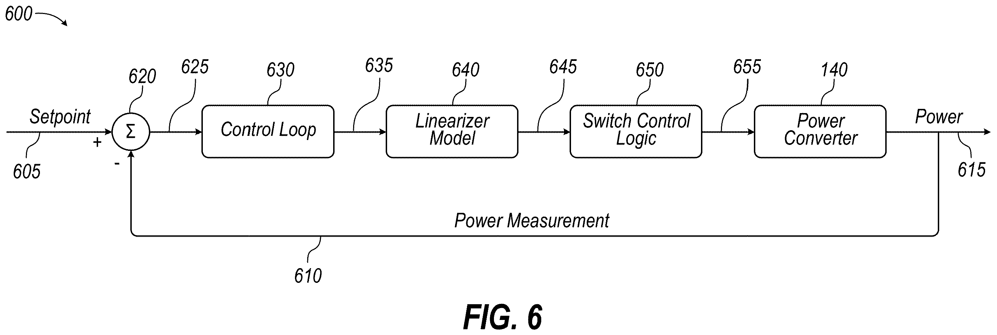

FIG. 5 is a flowchart illustrating an example process 500 for controlling operation of the power converter 140, according to some embodiments. In the example process 500, the electronic controller 305 may receive a setpoint corresponding to a desired power transfer between the primary side and the secondary side of the power converter 140. The electronic controller 305 controls operation of the switches 420A-420H and/or other components of the power converter 140 and/or grid support device 100 to maintain the power transfer between the primary side and the secondary side at the setpoint. FIG. 6 is a block diagram illustrating an example control loop 600 implementing the example process 500, according to some embodiments.

Referring collectively to FIGS. 5 and 6, in the example process 500, the electronic controller 305 generates a first control signal (at block 505). For example, the electronic controller 305 receives or generates a reference signal 605 corresponding to the desired setpoint. The electronic controller 305 receives or generates a feedback signal 610 representing an actual power transfer 615 between the primary side and the secondary side of the power converter 140. The electronic controller 305 provides the reference signal 605 and the feedback signal 610 to an error computation block 620. The error computation block 620 computes and outputs an error signal 625 representing a difference between the reference signal 605 (which corresponds to the setpoint or desired power transfer) and the feedback signal 610 (which corresponds to the actual power transfer 615). The electronic controller 305 provides the error signal 625 to a control loop 630. The control loop 630 generates and outputs a first control signal 635, which corresponds or correlates to the phase angle $\varphi$ between the primary side and the secondary side of the power converter 140.

In various implementations, the control loop 630 implements PI control. In examples where the control loop 630 implements PI control, the control loop 630 receives the error signal 625 representing the error between the desired and actual power transfer. The control loop 630 applies proportional and integral control to adjust for both the current (or present) error and the accumulated error and generates the first control signal 635 to minimize the errors. The control loop 630 may generate a proportional control term $P(t)$ based on the error $e(t)$ (corresponding to the error signal 625 at the current time $t$) and a tunable proportional gain $K_p$, for example, according to equation (2) below:

$$P(t) = K_p \cdot e(t) \qquad (2)$$

As illustrated in equation (2) above, the proportional gain $K_p$ adjusts the control signal in direct response to the magnitude of the error $e(t)$ at the current time $t$. A larger error $e(t)$ leads to a larger adjustment, while a smaller error $e(t)$ results in a smaller adjustment. The proportional gain $K_p$ determines how strongly the control loop 630 responds to the current error $e(t)$. A higher proportional gain $K_p$ means that the control loop 630 responds more aggressively to the current error $e(t)$, while a lower proportional gain $K_p$ means that the control loop 630 responds less aggressively to the current error $e(t)$.

The control loop 630 may further generate an integral control term $I(t)$ representing the accumulated error over a period of time. The integral control term $I(t)$ helps eliminate steady-state errors (e.g., long-term discrepancies between the setpoint and the actual power transfer 615). The control loop 630 may generate the integral control term $I(t)$ as a function of a tunable integral gain term $K_i$ and an integral of errors $e(\tau)$ at various points in time $\tau$, for example, according to equation (3) below:

$$I(t) = K_i \cdot \int_0^t e(\tau)\, d\tau \qquad\qquad (3)$$

As illustrated by equation (3), the integral term adds up past errors over time, ensuring that small but persistent errors that the proportion control term $P(t)$ alone may not eliminate are accounted for. A larger accumulated error over time $\int_0^t e(\tau)\, d\tau$ leads to a larger adjustment, while a smaller accumulated error over time $\int_0^t e(\tau)\, d\tau$ leads to a smaller adjustment. The integral gain $K_i$ determines how strongly the control loop 630 responds to the accumulated error over time $\int_0^t e(\tau)\, d\tau$. A higher integral gain $K_i$ means that the control loop 630 responds more aggressively to the accumulated error over time $\int_0^t e(\tau)\, d\tau$, while a lower integral gain $K_i$ means that the control loop 630 responds less aggressively to the accumulated error over time $\int_0^t e(\tau)\, d\tau$.

In examples where the control loop 630 implements proportional-integral (PI) control, the control loop 630 generates the first control signal 635 by summing the proportional control term $P(t)$ and the integral control term $P(t)$, for example, according to equation (4) below:

$$\text{Control Signal} = P(t) + I(t) \qquad\qquad (3)$$

In various implementations, the control loop 630 implements proportional-integral-derivative (PID) control. In examples where the control loop 630 implements PID control, the control loop 630 receives the error signal 625 representing the difference between the desired and actual power transfer and applies proportional control to adjust for the current (present) error, integral control to adjust for the accumulated error, and derivative control to adjust for the rate of change of the error. The control loop 630 generates the first control signal 635 to minimize these errors.

The control loop 630 may generate the proportional control term $P(t)$ and the integral control term $I(t)$ as previously described. Additionally, the control loop 630 may generate a derivative control term $D(t)$ that accounts for the rate of change of the error. The derivative control term $D(t)$ helps the control loop 630 predict and account for future error behavior and dampens oscillations, improving system stability. The derivative control term $D(t)$ may be calculated using a derivative gain $K_d$ and a rate of change of the error $e(t)$, for example, according to equation (4) below:

$$D(t) = K_d \cdot \frac{de(t)}{dt} \qquad\qquad (4)$$

The derivative control term $D(t)$ adjusts the control signal based on how quickly the error is changing, which may provide a dampening effect to prevent overshoots and oscillations. A larger rate of change of the error $\frac{de(t)}{dt}$ leads to a larger adjustment, while a smaller rate of change of the error $\frac{de(t)}{dt}$ results in a smaller adjustment. The derivative gain $K_d$ determines how strongly the control loop 630 responds to the rate of change of the error $\frac{de(t)}{dt}$. A higher derivative gain $K_d$ means that the control loop 630 responds more aggressively to the rate of change of the error $\frac{de(t)}{dt}$, while a lower derivative gain $K_d$ means that the control loop 630 responds less aggressively to the rate of change of the error $\frac{de(t)}{dt}$.

In examples where the control loop 630 implements PID control, the control loop 630 generates the first control signal 635 by summing the proportional control term $P(t)$, the integral control term $P(t)$, and the derivative control term $D(t)$ - for example, according to equation (5) below:

$$D(t) = K_d \cdot \frac{de(t)}{dt} \qquad\qquad (5)$$

In the example process 500, the electronic controller 305 generates a second control signal by transforming the first control signal 635 (at block 510). For example, the electronic controller 305 provides the first control signal 635 (which corresponds to the phase angle $\varphi$ and has a non-linear relationship with the power transfer between the primary and secondary sides of the power converter 140) to a linearizer model 640. The linearizer model 640 applies a function that linearizes this relationship, outputting a second control signal 645 that has a linear relationship with the power transfer.

In various implementations, the linearizer model 640 applies a linearization function $g(x)$ defined according to equation (6) below:

$$g(x) = k \left( 1 - \sqrt{1 - |x|} \right) \cdot \text{sign}(x) \qquad (6)$$

In equation (6) above, the variable $k$ may be initialized to a value of $\frac{\pi}{2}$, and the function $\text{sign}(x)$ returns a value of -1 when the input $x$ is negative, a value of 0 when the input $x$ is zero, and a value of 1 when the input $x$ is positive.

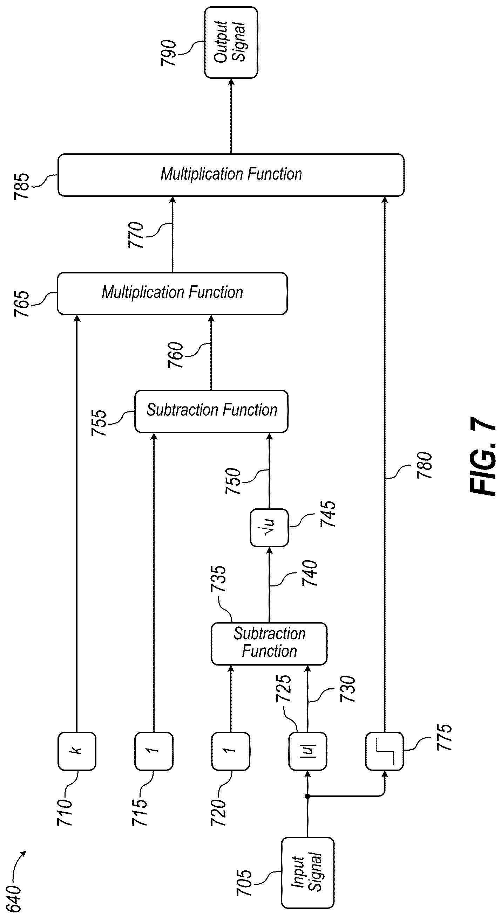

FIG. 7 is a block diagram illustrating operations that the electronic controller 305 performs to implement the linearizer model 640 according to the linearization function $g(x)$, according to some embodiments. In the example of FIG. 7, the electronic controller 305 provides an input signal 705 to the linearizer model 640. In various implementations, the input signal 705 is the first control signal 635. In various implementations, the electronic controller 305 initializes a variable 710 to $k$ (for example, a value of $\frac{\pi}{2}$), a variable 715 to a value of 1, and a variable 720 to a value of 1. The electronic controller 305 may provide the input signal 705 to an absolute value function 725, which generates an output 730 corresponding to an absolute value of the input signal 705. The electronic controller 305 may provide the variable 720 and the output 730 to a subtraction function 735. The subtraction function 735 subtracts the output 730 from the variable 720 to generate an output 740.

The electronic controller 305 may provide the output 740 to a square root function 745, which generates an output 750 corresponding to a square root of the output 740. The electronic controller 305 may provide the variable 715 and the output 750 to a subtraction function 755. The subtraction function 755 subtracts the output 750 from the variable 715 to generate an output 760. The electronic controller 305 may provide the variable 710 and the output 760 to a multiplication function 765. The multiplication function 765 multiplies the variable 710 and the output 760 to generate an output 770.

The electronic controller 305 may provide the input signal 705 to a sign function 775, which generates an output 780 having a value of a value of -1 when the input signal 705 is negative, a value of 0 when the input signal 705 is zero, and a value of 1 when the input signal 705 is positive. The electronic controller 305 may provide the output 770 and the output 780 to a multiplication function 785. The multiplication function 785 multiplies the output 770 and the output 780 to generate an output signal 790. In various implementations, the output signal 790 is the second control signal 645.

In some examples, the electronic controller 305 implements the linearizer model 640 according to a lookup table instead of applying linearization function $g(x)$ defined according to equation (6) above or performing the operations described with reference to FIG. 7.

Returning to FIGS. 5 and 6, in the example process 500, the electronic controller 305 controls operation of the power converter 140 according to the second control signal 645 (at block 515). For example, the electronic controller 305 provides the second control signal 645 as inputs to switch control logic 650. In various implementations, the switch control logic 650 generates gate signals 655, which may be used to control operation of the switches 420A-420H of the power converter 140. In some examples, the gate signals 655 are timing signals that control the moments when the various switches 420A-420H open and close, which define the actual power transfer 615 between the primary and secondary side of the power converter 140.

Transforming the first control signal 635 into the second control signal 645 - which has a linear relationship with the actual power transfer 615 provides a variety of technical benefits related to controlling operation of the power converter 140. As previously described, in the control loop 600, linear changes in the second control signal 645 correspond to linear changes in the actual power transfer 615. Changes in the actual power transfer 615 directly impact the feedback signal 610, which is used to compute the error signal 625. This linearization simplifies the control dynamics of the control loop 600, particularly in examples where the control loop 630 is implemented according to PI or PID control. For example, this linearization allows the control loop 630 to respond to error signals more accurately and predictably, ensuring that each adjustment in the control signal results in proportional changes in power transfer. This leads to smoother system operation (for example, by reducing the risk of overshoot or oscillation) and faster stabilization of the power transfer to match the desired setpoint.

Additionally, the linearization makes the tuning of the PI or PID control parameters - such as the proportional gain $K_p$, integral gain $K_i$, and derivative gain $K_d$ - more efficient, as the system's responses to these adjustments become more consistent and easier to optimize. Thus, in various implementations, the PI or PID control parameters are tuned with the linearizer model 640 in place (or implemented). Thus, overall, linearizing the first control signal 635 and controlling operation of the power converter 140 according to the linearized second control signal 645 enhances both the performance and reliability of the control loop 630 in maintain precise power regulation in the power converter 140.

Thus, embodiments described herein provide, among other things, systems and methods for controlling operating sequences of grid support devices. Various features and advantages are set forth in the following claims.

REPRESENTATIVE FEATURES

Representative features are set out in the following clauses, which stand alone or may be combined, in any combination, with one or more features disclosed in the text and/or drawings of the specification.

1. A device, comprising:

a bidirectional direct current-direct current converter including a plurality of switches configured to control a flow of electrical power between a primary side and a secondary side; and

a controller configured to:

generate a first control signal, the first control signal being correlated to a desired phase shift angle between the primary side and the secondary side,
apply a linearization transformation to the first control signal to generate a second control signal, the second control signal being proportional to a desired flow of electrical power between the primary side and the secondary side, and
control the plurality of switches according to the second control signal to regulate the flow of electrical power between the primary side and the secondary side.

2. The device of clause 1, wherein controller implements a proportional-integral controller to generate the first control signal.

3. The device of clause 1, wherein the controller implements a proportional-integral-derivative controller to generate the first control signal.

4. The device of clause 1, wherein changes in the desired phase shift angle are not linearly proportional to changes in the desired flow of electrical power between the primary side and the secondary side.

5. The device of clause 1, wherein changes in the second control signal are linearly proportional to changes in the flow of electrical power between the primary side and the secondary side.

6. The device of clause 1, wherein the primary side comprises:

a voltage source configured to receive direct current electrical power;
a first capacitor connected in parallel with the voltage source; and
a first bridge connected in parallel with the voltage source and the first capacitor, the first bridge including a first plurality of switches and a first plurality of diodes.

7. The device of clause 6, wherein the secondary side comprises:

a second bridge including a second plurality of switches and a second plurality of diodes;
a second capacitor connected in parallel with the second bridge; and
a voltage output connected in parallel with the second capacitor and the second bridge.

8. The device of clause 7, further comprising:

an inductor positioned between the first bridge and the second bridge; and
a transformer positioned between the first bridge and the second bridge.

9. The device of clause 8, wherein:

the controller is configured to control the first plurality of switches to generate an alternating current waveform; and
the alternating current waveform is transferred through the transformer to the second bridge.

10. The device of clause 9, wherein the controller is configured to control the second plurality of switches to rectify the alternating current waveform into a direct current output.

11. A method for operating a bidirectional direct current-direct current converter, comprising:

generating a first control signal, the first control signal being correlated to a desired phase shift angle between a primary side and a secondary side of the bidirectional direct current-direct current converter;
applying a linearization transformation to the first control signal to generate a second control signal, the second control signal being proportional to a desired flow of electrical power between the primary side and the secondary side; and
controlling a plurality of switches of the bidirectional direct current-direct current converter according to the second control signal to regulate a flow of electrical power between the primary side and the secondary side.

12. The method of clause 11, wherein the first control signal is generated by a proportional-integral controller.

13. The method of clause 11, wherein the first control signal is generated by a proportional-integral-derivative controller.

14. The method of clause 11, wherein changes in the desired phase shift angle are not linearly proportional to changes in the desired flow of electrical power between the primary side and the secondary side.

15. The method of clause 11, wherein changes in the second control signal are linearly proportional to changes in the flow of electrical power between the primary side and the secondary side.

16. The method of clause 11, wherein the primary side comprises:

a voltage source configured to receive direct current electrical power;
a first capacitor connected in parallel with the voltage source; and
a first bridge connected in parallel with the voltage source and the first capacitor, the first bridge including a first plurality of switches and a first plurality of diodes.

17. The method of clause 16, wherein the secondary side comprises:

a second bridge including a second plurality of switches and a second plurality of diodes;
a second capacitor connected in parallel with the second bridge; and
a voltage output connected in parallel with the second capacitor and the second bridge.

18. The method of clause 17, wherein:

an inductor is positioned between the first bridge and the second bridge; and
a transformer is positioned between the first bridge and the second bridge.

19. The method of clause 18, further comprising:

controlling the first plurality of switches to generate an alternating current waveform; and
transferring the alternating current waveform through the transformer to the second bridge.

20. The method of clause 19, further comprising controlling the second plurality of switches to rectify the alternating current waveform into a direct current output.

## Claims

1. A device, comprising:

a bidirectional direct current-direct current converter including a plurality of switches configured to control a flow of electrical power between a primary side and a secondary side; and
a controller configured to:

generate a first control signal, the first control signal being correlated to a desired phase shift angle between the primary side and the secondary side,

apply a linearization transformation to the first control signal to generate a second control signal, the second control signal being proportional to a desired flow of electrical power between the primary side and the secondary side, and

control the plurality of switches according to the second control signal to regulate the flow of electrical power between the primary side and the secondary side.

2. The device of claim 1, wherein controller implements a proportional-integral controller to generate the first control signal.

3. The device of claim 1, wherein the controller implements a proportional-integral-derivative controller to generate the first control signal.

4. The device of claim 1, wherein changes in the desired phase shift angle are not linearly proportional to changes in the desired flow of electrical power between the primary side and the secondary side.

5. The device of claim 1, wherein changes in the second control signal are linearly proportional to changes in the flow of electrical power between the primary side and the secondary side.

6. The device of claim 1, wherein the primary side comprises:

a voltage source configured to receive direct current electrical power;
a first capacitor connected in parallel with the voltage source; and
a first bridge connected in parallel with the voltage source and the first capacitor, the first bridge including a first plurality of switches and a first plurality of diodes.

7. The device of claim 6, wherein the secondary side comprises:

a second bridge including a second plurality of switches and a second plurality of diodes;
a second capacitor connected in parallel with the second bridge; and
a voltage output connected in parallel with the second capacitor and the second bridge,
preferably further comprising:

an inductor positioned between the first bridge and the second bridge; and
a transformer positioned between the first bridge and the second bridge.

8. The device of claim 7, wherein:

the controller is configured to control the first plurality of switches to generate an alternating current waveform; and
the alternating current waveform is transferred through the transformer to the second bridge.

9. The device of claim 8, wherein the controller is configured to control the second plurality of switches to rectify the alternating current waveform into a direct current output.

10. A method for operating a bidirectional direct current-direct current converter, comprising:

generating a first control signal, the first control signal being correlated to a desired phase shift angle between a primary side and a secondary side of the bidirectional direct current-direct current converter;
applying a linearization transformation to the first control signal to generate a second control signal, the second control signal being proportional to a desired flow of electrical power between the primary side and the secondary side; and
controlling a plurality of switches of the bidirectional direct current-direct current converter according to the second control signal to regulate a flow of electrical power between the primary side and the secondary side.

11. The method of claim 10, wherein:

the first control signal is generated by a proportional-integral controller, or

the first control signal is generated by a proportional-integral-derivative controller, or
changes in the desired phase shift angle are not linearly proportional to changes in the desired flow of electrical power between the primary side and the secondary side, or
changes in the second control signal are linearly proportional to changes in the flow of electrical power between the primary side and the secondary side.

12. The method of claim 10, wherein the primary side comprises:

a voltage source configured to receive direct current electrical power;
a first capacitor connected in parallel with the voltage source; and
a first bridge connected in parallel with the voltage source and the first capacitor, the first bridge including a first plurality of switches and a first plurality of diodes.

13. The method of claim 12, wherein the secondary side comprises:

a second bridge including a second plurality of switches and a second plurality of diodes;
a second capacitor connected in parallel with the second bridge; and
a voltage output connected in parallel with the second capacitor and the second bridge.

14. The method of claim 13, wherein:

an inductor is positioned between the first bridge and the second bridge; and
a transformer is positioned between the first bridge and the second bridge.

15. The method of claim 14, further comprising:

controlling the first plurality of switches to generate an alternating current waveform; and
transferring the alternating current waveform through the transformer to the second bridge,
preferably further comprising controlling the second plurality of switches to rectify the alternating current waveform into a direct current output.

**FIG. 1**

EP 4 730 633 A1

**FIG. 2A**

*FIG. 2B*

FIG. 3

300

Battery System 110
AC Power Input 120
AC Power Output 130

Power Converter 140

Control

Controller 305

Processing Unit 325
Control Unit 345
Arithmetic Logic Unit 350
Registers 355

Memory 330
Program Storage
Data Storage

Input Units 335
Output Units 340

365

User Input 310
Components 315
Indicator(s) 320
Sensor(s) 360

**FIG. 4A**

FIG. 4B

500

Start

505 — Generate first control signal

510 — Generate second control signal by transforming first control signal

515 — Control converter according to second control signal

**FIG. 5**

**FIG. 6**

**FIG. 7**

EP 4 730 633 A1

Europäisches Patentamt

European Patent Office

Office européen des brevets

**EUROPEAN SEARCH REPORT**

**Application Number**

EP 25 20 9609

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TIAN YANJUN ET AL: "DC-Link Voltage Coordinated-Proportional Control for Cascaded Converter With Zero Steady-State Error and Reduced System Type", IEEE TRANSACTIONS ON POWER ELECTRONICS, INSTITUTE OF ELECTRICAL AND ELECTRONICS ENGINEERS, USA, vol. 31, no. 4, 1 April 2016 (2016-04-01), pages 3177-3188, XP011592260, ISSN: 0885-8993, DOI: 10.1109/TPEL.2015.2444386 [retrieved on 2015-11-26] * page 1 - page 2; figures 1,2,3,4 * ----- | 1-15 | INV. H02M3/335 H02M1/00 |
| A | SAEED SARAH ET AL: "Dual-Active-Bridge Isolated DC-DC Converter With Variable Inductor for Wide Load Range Operation", IEEE TRANSACTIONS ON POWER ELECTRONICS, INSTITUTE OF ELECTRICAL AND ELECTRONICS ENGINEERS, USA, vol. 36, no. 7, 5 January 2021 (2021-01-05), pages 8028-8043, XP011841504, ISSN: 0885-8993, DOI: 10.1109/TPEL.2020.3048928 [retrieved on 2021-03-05] * page 7; figures 1,14,17 * ----- | 1-15 | |
| | | | **TECHNICAL FIELDS SEARCHED (IPC)** |
| | | | H02M |

-/--

The present search report has been drawn up for all claims

| Place of search | Date of completion of the search | Examiner |
|---|---|---|
| The Hague | 17 February 2026 | Zeljkovic, Sandra |

Europäisches
Patentamt

European
Patent Office

Office européen
des brevets

# EUROPEAN SEARCH REPORT

Application Number

EP 25 20 9609

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HEBALA OSAMA M ET AL: "Generic Closed-Loop Controller for Power Regulation in Dual Active Bridge DC-DC Converter With Current Stress Minimization", IEEE TRANSACTIONS ON INDUSTRIAL ELECTRONICS, IEEE SERVICE CENTER, PISCATAWAY, NJ, USA, vol. 66, no. 6, 1 June 2019 (2019-06-01), pages 4468-4478, XP011707429, ISSN: 0278-0046, DOI: 10.1109/TIE.2018.2860535 [retrieved on 2019-01-31] * figures 1,6,7 * ----- | 1-15 | |
| | | | TECHNICAL FIELDS SEARCHED (IPC) |

The present search report has been drawn up for all claims

| Place of search | Date of completion of the search | Examiner |
|---|---|---|
| The Hague | 17 February 2026 | Zeljkovic, Sandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**EP 4 730 633 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 63709716